# EUROPEAN PATENT APPLICATION

(11) **EP 4 528 329 A1**
(43) Date of publication of application: **26.03.2025**
(21) Application number: 23937739.3
(22) Date of filing: 09.06.2023
(51) Int. Cl.: G01S 13/91, G01S 13/536, G01S 13/56, G07B 15/06, G08G 1/01

(54) **VEHICLE DETECTION SENSOR AND PROGRAM FOR VEHICLE DETECTION SENSOR**

(71) Applicant: Optex Co., Ltd., Otsu-shi, Shiga 520-0101 (JP)
(72) Inventor: NISHIKAWA, Takao, Otsu-shi, Shiga 5200101 (JP); OYAMA, Yoshinobu, Otsu-shi, Shiga 5200101 (JP); MATSUMOTO, Takuya, Otsu-shi, Shiga 5200101 (JP)
(74) Representative: Müller Hoffmann & Partner
(86) International application number: PCT/JP2023/021582
(87) International publication number: WO 2024/252677

(57) **Abstract**

In order to provide a vehicle detection sensor 100 with high detection accuracy capable of detecting entrance and exit of a vehicle with respect to a predetermined area P while discriminating between a vehicle and a pedestrian at low cost, the vehicle detection sensor 100 is installed at a predetermined place on a site where a vehicle enters or exits, emits a transmission wave whose frequency changes as time passes, and receives a reflected wave of the transmission wave reflected by an object and returning, the vehicle detection sensor 100 including: a velocity information acquisition unit 43 that acquires velocity information regarding a velocity of an object approaching a predetermined area P or going away from the predetermined area P on a basis of the reflected wave; an object discrimination unit 44 that determines whether or not an object is a vehicle on a basis of the velocity information; and a presence/absence determination unit 47 that determines whether or not an object is in the predetermined area P on a basis of at least one of reflection intensity information indicating an intensity of the reflected wave or distance information indicating a distance to an object obtained on a basis of the reflected wave, in which the velocity information and at least one of the reflection intensity information and the distance information are information obtained by a single input single output (SISO) method.

## Description

### Technical Field

The present invention relates to a vehicle detection sensor installed on a site where a vehicle enters and exits, and a vehicle detection sensor program.

### Background Art

Conventionally, for detection of a vehicle in a parking area of a parking lot, a stop area beside a ticket machine, or the like, what is referred to as a loop coil sensor is used, but there are various problems that construction for burying the loop coil in the ground is required, and a large-scale work for digging the ground again at the time of maintenance is required.

Therefore, as an alternative to the loop coil sensor, as disclosed in Patent Literature 1, for example, a technology is known in which a vehicle detection sensor is installed in a ticket machine or the like in front of a gate to detect a vehicle entering or exiting from the ticket machine.

As such a vehicle detection sensor, an FMCW radar excellent in environmental resistance such as rain is used, and among them, an inexpensive single input single output (SISO) type is used. By using this, it is possible to detect the vehicle by emitting a transmission wave whose frequency changes as time passes and receiving a reflected wave of the transmission wave reflected by an object and returned, so that it is possible to greatly shorten the construction period and to reduce the time and cost required for maintenance.

However, when the vehicle is detected by receiving the reflected wave as described above, in recent years, the intensity of the reflected wave reflected by the vehicle and returned becomes weak and the vehicle cannot be recognized or a pedestrian is erroneously detected as a vehicle in some cases, for example, in a case where the vehicle enters the sensor obliquely due to various shapes of the vehicle.

In this case, there are problems that the gate is not opened even though the vehicle has entered, and that a pedestrian is erroneously detected as a vehicle and the gate is erroneously opened.

In order to prevent such a problem, when a MIMO (Multi Input Multi Output) type sensor is used, an amount of information (determination material) to be obtained, such as angle information indicating an angle from which the reflected wave returns, increases, and thus, improvement in sensor accuracy is expected, but there arises another problem that the sensor becomes expensive.

### Citation List

### Patent Literature

Patent Literature 1: JP 6811065 B2

### Summary of Invention

### Technical Problem

Therefore, the present invention has been made to solve the above problems at once, and a main object thereof is to provide a vehicle detection sensor with high detection accuracy capable of detecting entrance and exit of a vehicle with respect to a predetermined area while discriminating between a vehicle and a pedestrian at low cost.

### Solution to Problem

That is, a vehicle detection sensor according to the present invention is a vehicle detection sensor installed at a predetermined place on a site where a vehicle enters or exits, the vehicle detection sensor emitting a transmission wave whose frequency changes as time passes, and receiving a reflected wave of the transmission wave reflected by an object and returning, the vehicle detection sensor including: a velocity information acquisition unit that acquires velocity information regarding a velocity of an object approaching a predetermined area or going away from the predetermined area on the basis of the reflected wave; an object discrimination unit that determines whether or not an object is a vehicle on the basis of the velocity information; and a presence/absence determination unit that determines whether or not an object is in the predetermined area on the basis of at least one of reflection intensity information indicating an intensity of the reflected wave or distance information indicating a distance to an object obtained on the basis of the reflected wave, in which the velocity information and at least one of the reflection intensity information and the distance information are information obtained by a SISO method.

According to the vehicle detection sensor configured as described above, it is possible to determine whether or not the object is a vehicle on the basis of the velocity information obtained by the SISO method, and it is possible to determine whether or not the object is in the predetermined area P on the basis of at least one of the reflection intensity information or the distance information obtained by the SISO method. Therefore, it is not necessary to use an expensive MIMO sensor, and it is possible to provide the vehicle detection sensor with high detection accuracy at low cost.

It is preferable to include: a reflection intensity information acquisition unit that acquires the reflection intensity information; and a distance information acquisition unit that acquires the distance information, and that the presence/absence determination unit determines whether an object is present in the predetermined area on the basis of the reflection intensity information and the distance information.

In this case, since the presence or absence of the object is determined on the basis of both the reflection intensity information and the distance information, the determination material is more than that based on one of the reflection intensity information and the distance information, and the presence or absence of the object in the predetermined area can be determined more reliably.

It is preferable that the vehicle detection sensor is configured to emit a transmission wave toward the predetermined area, and emit a transmission wave toward a front area or a rear area away forward or rearward from the predetermined area along an entrance/exit direction of the vehicle.

In this case, by emitting the transmission wave toward the predetermined area, it is possible to obtain stable reflection intensity from the vehicle existing in the predetermined area, and it is easy to determine whether or not there is the object, and by emitting the transmission wave toward the front area or the rear area, it is possible to obtain velocity information for determining whether or not the object is the vehicle.

As an embodiment for emitting the transmission wave to the front area or the rear area while emitting the transmission wave to the predetermined area, it is possible to consider an aspect in which at least two sets of transmitters and receivers of the SISO method for the predetermined area and for the front area or the rear area are used. However, this aspect increases the number of components to be mounted, and the cost increases accordingly.

Therefore, it is preferable that a transmission wave traveling toward the predetermined area and a transmission wave traveling toward the front area or the rear area are emitted from a common transmitter, and reflected waves of the transmission waves reflected by an object and returned are received by a common receiver.

In this case, one set of a transmitter and a receiver is used in the embodiment, and the cost of the sensor can be further reduced.

It is preferable that a transmission/reception pattern indicating a transmission/reception antenna gain obtained by combining a transmission antenna gain of the transmitter corresponding to an emission angle of a transmission wave and a reception antenna gain of the receiver corresponding to a reception angle of a reflected wave has a first peak appearing in a front direction and a quasi-peak appearing at an angle different from the front direction and smaller than the first peak.

In this case, since the intensity difference is generated between the first peak and the quasi-peak, it is possible to determine whether the received reflected wave has returned from the predetermined area or has returned from the front area or the rear area. This makes it possible to accurately determine the presence or absence of a vehicle in the predetermined area, for example, even in an environment with a wide road width.

It is preferable that the transmission/reception pattern has the quasi-peak on each of a high angle side and a low angle side of the first peak.

In this case, it is possible to determine whether or not an object approaching the predetermined area is a vehicle or an object distant from the predetermined area is a vehicle. As a result, for example, detecting the velocity of the moving object in the far direction is used as one of the criteria for determining that the vehicle has exited from the predetermined area, whereby the accuracy of the exit determination can be improved.

Further, with the above-described configuration, the vehicle detection sensor according to the present invention can be used for both the left lane and the right lane.

It is preferable to further include a dielectric lens that refracts a part of a transmission wave emitted from the transmitter and guides the part of the transmission wave to the front area or the rear area.

In this case, the radiation power of the transmission wave traveling toward the front area or the rear area can be increased, and the configuration for emitting the transmission wave to the front area or the rear area while emitting the transmission wave to the predetermined area can be easily realized by using the dielectric lens.

Note that, in the technical field using a dielectric lens, it is usually common technical knowledge to make the first peak steep, but making a quasi-peak different from the first peak appear is an idea unique to the present invention.

In addition, a vehicle detection sensor program according to the present invention is a vehicle detection sensor program, which is used in a vehicle detection sensor installed at a predetermined place on a site where a vehicle enters or exits, the vehicle detection sensor emitting a transmission wave whose frequency changes as time passes, and receiving a reflected wave of the transmission wave reflected by an object and returning, the program causing a computer to exert functions as: a velocity information acquisition unit that acquires velocity information regarding a velocity of an object approaching a predetermined area or going away from the predetermined area on the basis of the reflected wave; an object discrimination unit that determines whether or not an object is a vehicle on the basis of the velocity information; and a presence/absence determination unit that determines whether or not an object is in the predetermined area on the basis of at least one of reflection intensity information indicating an intensity of the reflected wave or distance information indicating a distance to an object obtained on the basis of the reflected wave, in which the velocity information and at least one of the reflection intensity information and the distance information are information obtained by a SISO method.

The vehicle detection sensor program configured as described above can achieve the same effects as those of the above-described vehicle detection sensor.

### Advantageous Effects of Invention

According to the present invention configured as described above, it is possible to provide the vehicle detection sensor with high detection accuracy capable of detecting entrance and exit of a vehicle to and from the predetermined area while discriminating between a vehicle and a pedestrian at low cost.

### Brief Description of Drawings

FIG. 1 is a schematic diagram illustrating an installation example of a vehicle detection system according to an embodiment of the present invention.
FIG. 2 is a schematic diagram illustrating a configuration of a vehicle detection sensor of the embodiment.
FIG. 3 is a diagram for explaining the principle of a FMCW radar of the embodiment.
FIG. 4 is a schematic diagram illustrating a transmission wave emitted from the vehicle detection sensor of the embodiment.
FIG. 5 is a transmission/reception pattern illustrating a transmission/reception antenna gain of the embodiment.
FIG. 6 is a schematic diagram illustrating a configuration of the vehicle detection sensor of the embodiment.
FIG. 7 is a schematic diagram illustrating a configuration of a dielectric lens of the embodiment.
FIG. 8 is a diagram for explaining an operation of an object discrimination unit of the embodiment.
FIG. 9 is a flowchart for explaining an operation of the vehicle detection sensor of the embodiment.
FIG. 10 is a flowchart for explaining an operation of the vehicle detection sensor of the embodiment.

### Description of Embodiments

A vehicle detection sensor according to an embodiment of the present invention will be described with reference to the drawings. However, the present invention is not limited by the following description.

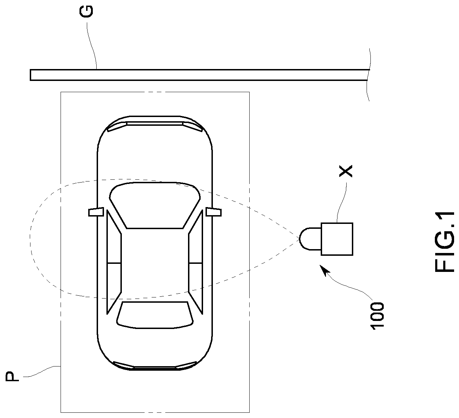

A vehicle detection sensor 100 of the present embodiment is fixedly installed and used at a predetermined location of a site where a vehicle enters and exits, and detects entrance and exit of the vehicle to and from a predetermined area P such as a stop area beside a ticket machine as illustrated in FIG. 1 or a parking area of a parking lot (not illustrated). Note that the predetermined area P may be not only an area where the vehicle stops or should stop, but also an area where the vehicle should decelerate to a predetermined speed, such as an ETC-compatible tollgate on an expressway.

As illustrated in FIG. 1, the vehicle detection sensor 100 is provided corresponding to a stop area P provided in front of a movable gate G such as a gate bar or a chain gate that moves up and down, or a slide gate that opens and closes left and right, and is attached to a fixed member X such as a pole provided at a predetermined place near the stop area P.

The vehicle detection sensor 100 of the present embodiment is configured using an FMCW radar, and emits a transmission wave whose frequency changes as time passes and receives a reflected wave of the transmission wave reflected by an object and returned.

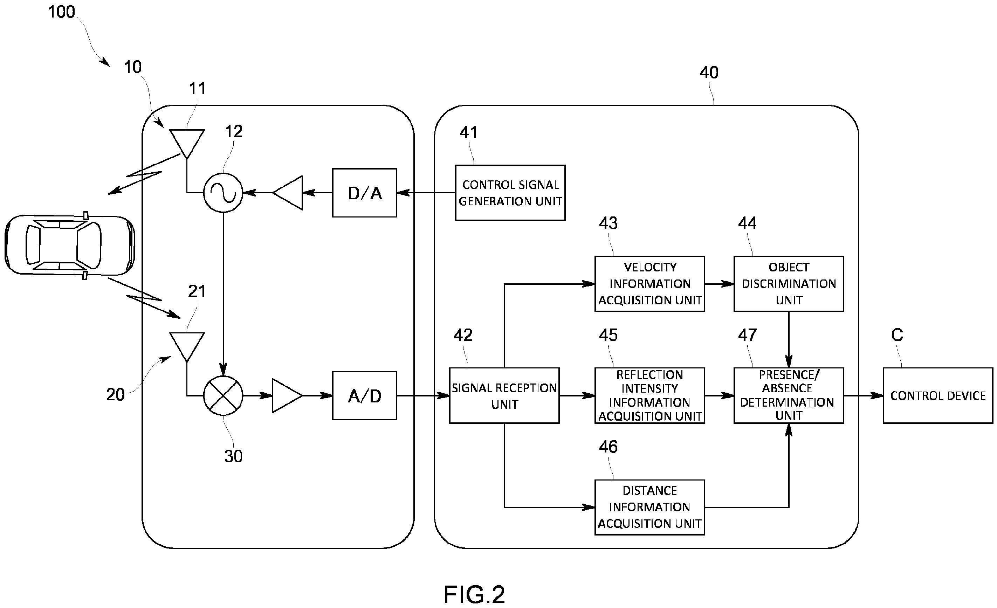

More specifically, as illustrated in FIG. 2, the vehicle detection sensor 100 includes a transmitter 10 that transmits a transmission wave whose frequency changes as time passes, a receiver 20 that receives a reflected wave of the transmission wave reflected by an object and returned, a mixer 30 that generates a beat signal by mixing the transmission wave and the reflected wave, and a controller 40 that controls the operation of the sensor. Note that the transmitter 10 includes at least a transmission antenna 11 and a voltage-controlled oscillator 12, and the receiver 20 includes at least a reception antenna 21.

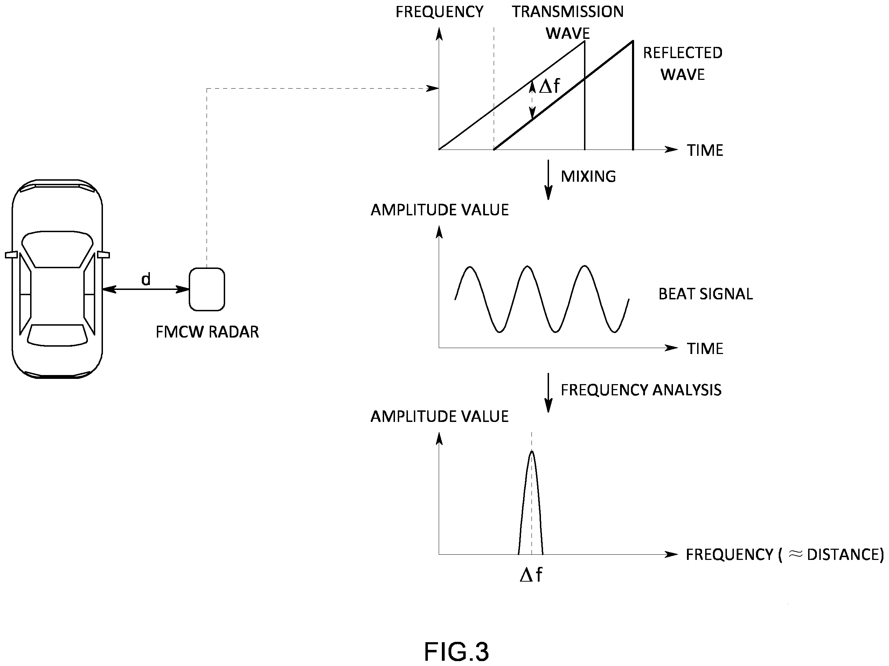

Here, the principle of the FMCW radar will be briefly described with reference to FIG. 3. Since the reflected wave returned after the transmission wave is reflected by the object varies in the time until the reflected wave is returned depending on a distance d from the FMCW sensor to the object, a difference Δf occurs between the frequencies of the transmission wave and the reflected wave depending on the distance d. Therefore, the distance to the object can be detected by mixing the transmission wave and the reflected wave to generate a beat signal and performing frequency analysis on the beat signals.

Using this, the vehicle detection sensor 100 of the present embodiment is configured to detect the presence or absence (existence or non-existence) of the vehicle in the predetermined area P, and outputs the presence/absence information to, for example, a control device C that controls the operation of the movable gate G described above.

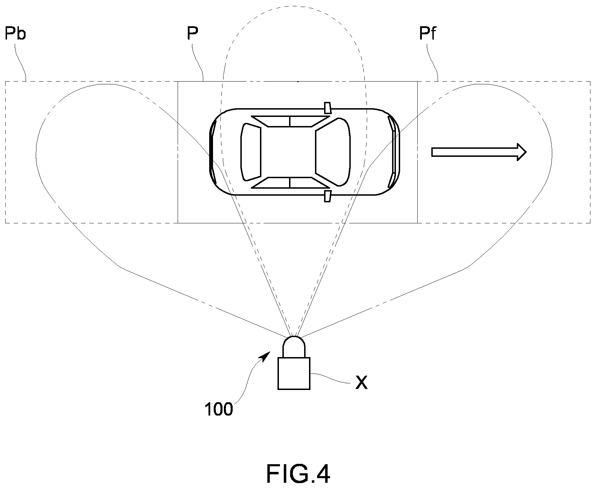

However, as illustrated in FIG. 4, the vehicle detection sensor 100 is configured to emit a transmission wave toward the predetermined area P, and emit a transmission wave toward a front area Pf and a rear area Pb away from the predetermined area P frontward or rearward along the entrance/exit direction of the vehicle.

However, the vehicle detection sensor 100 does not necessarily have to emit a transmission wave to both the front area Pf and the rear area Pb, and may be configured to emit a transmission wave to at least one of the front area Pf and the rear area Pb while emitting a transmission wave to the predetermined area P in front.

The vehicle detection sensor 100 is configured such that a transmission wave traveling toward the predetermined area P and a transmission wave traveling toward the front area Pf or the rear area Pb are emitted from a common transmitter, and reflected waves of the transmission waves reflected by an object and returned are received by a common receiver 20.

In order to use the common transmitter and receiver 20 in this manner, the vehicle detection sensor 100 here is characterized by a transmission/reception pattern indicating a transmission/reception antenna gain corresponding to the transmitter and the receiver 20.

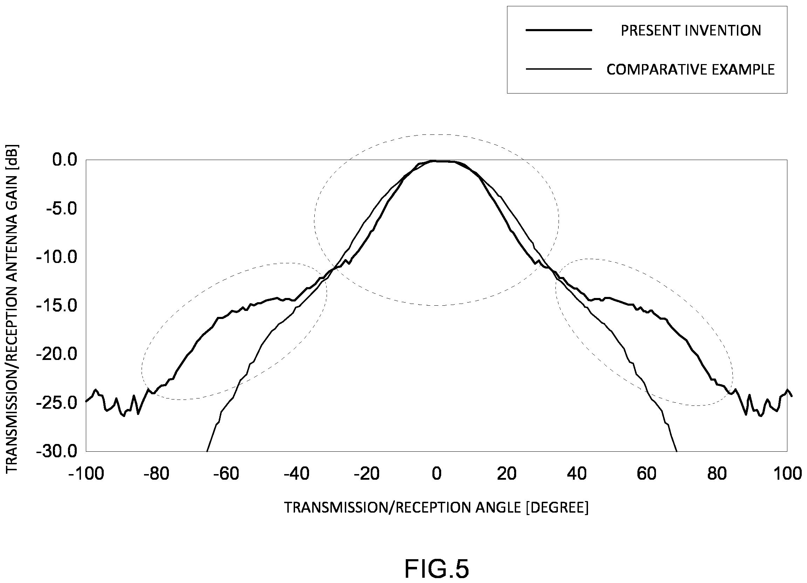

More specifically, as illustrated in FIG. 5, the transmission/reception pattern indicating the transmission/reception antenna gain obtained by combining the transmission antenna gain of the transmitter corresponding to the radiation angle of the transmission wave and the reception antenna gain of the receiver 20 corresponding to the reception angle of the reflected wave has a first peak appearing in the front direction and a quasi-peak appearing at an angle different from the front direction and smaller than the first peak.

In FIG. 5, a thick solid line indicates the transmission/reception pattern of the vehicle detection sensor 100 according to the present embodiment, and a thin solid line indicates a comparative example to be described later.

Here, each of the transmission pattern indicating the transmission antenna gain and the reception pattern indicating the reception antenna gain has a peak corresponding to the first peak and a peak corresponding to the quasi-peak. However, for example, even if one of the transmission pattern and the reception pattern does not have a peak corresponding to the quasi-peak, the transmission/reception pattern obtained as a result of combining may have the first peak and the quasi-peak.

As illustrated in FIG. 5, the transmission/reception pattern of the present embodiment has quasi-peaks on each of the high angle side and the low angle side of the first peak, so that the reflected wave returning from the front direction and the reflected wave returning from the side deviated by a predetermined angle from the front direction can be received by the common receiver 20.

The peak is a portion including an inflection point at which the inclination of the radiation power with respect to the radiation angle is switched from increase to decrease or from decrease to increase. In this embodiment, as can be seen from the portion surrounded by the dotted line in FIG. 5, the first peak appears in the front direction (direction of 0 degrees) of the sensor, and the quasi-peak appears in the direction of 30 degrees to 70 degrees and the direction of -30 degrees to -70 degrees. In other words, the vehicle detection sensor of the present embodiment has sensitivity in the direction of 30 degrees to 70 degrees and the direction of -30 degrees to -70 degrees.

The above-described transmission/reception pattern can cause a difference between the reflection intensity of the reflected wave from the predetermined area P and the reflection intensity of the reflected wave from the front area Pf or the rear area Pb, and here, the latter reflection intensity is weaker than the former reflection intensity.

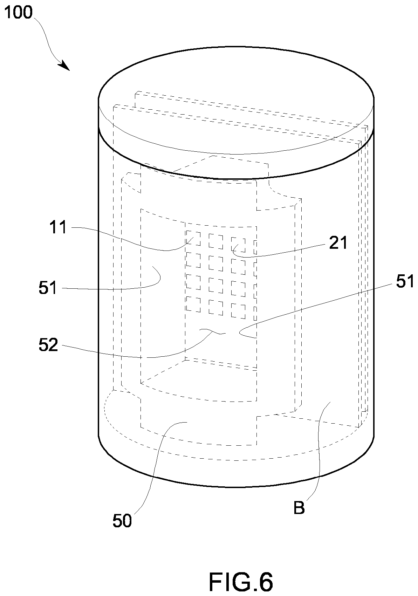

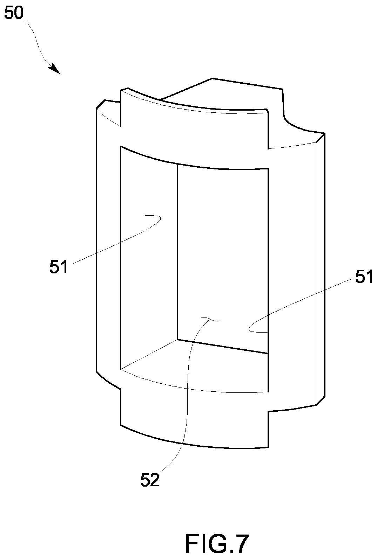

In order to obtain such a transmission/reception pattern, as illustrated in FIGS. 6 and 7, the vehicle detection sensor 100 of the present embodiment includes a dielectric lens 50 that refracts a part of the transmission wave emitted from the transmitter and guides the transmission wave to the front area Pf or the rear area Pb. Note that the transmission/reception pattern without the dielectric lens 50 is a comparative example represented by a thin solid line in FIG. 5.

The dielectric lens 50 includes a plurality of lens surfaces 51 provided so as to surround the transmission antenna 11 and the reception antenna 21, and a radio wave passage 52 which is a space formed inside these lens surfaces 51.

The plurality of lens surfaces 51 refracts radio waves transmitted and received between the transmission antenna 11 and the reception antenna 21, and is provided so as to stand upright from a substrate B on which the transmission antenna 11 and the reception antenna 21 are arranged.

The radio wave passage 52 opens so as to face the transmission antenna 11 and the reception antenna 21, and has a rectangular shape in front view here. However, the shape of the radio wave passage 52 is not limited thereto, and for example, the definition may be changed to an elliptical shape, a circular shape, a polygonal shape, or the like.

In the present embodiment, a pair of lens surfaces 51 is arranged at each position where the transmission antenna 11 and the reception antenna 21 are sandwiched from the width direction (horizontal direction), and these lens surfaces 51 are inclined so as to gradually approach the transmission antenna 11 and the reception antenna 21 toward the substrate B. In other words, the radio wave passage 52 is formed so that the width gradually decreases toward the transmission antenna 11 and the reception antenna 21.

With such a configuration, the transmission wave is emitted from the transmission antenna 11 in the front direction without being refracted, and is emitted from the transmission antenna 11 to the side while being refracted through the lens surface 51. On the other hand, the reflected wave is guided to the reception antenna 21 without being refracted from the front direction, and is guided to the reception antenna 21 from the side while being refracted through the lens surface 51.

Next, functions and operations of the above-described controller 40 described above will be described.

The controller 40 physically includes a CPU, a memory, and the like, and functionally, when the CPU and its peripheral devices are operated according to the vehicle detection program stored in the memory, returns to FIG. 2, and exerts functions as a control signal generation unit 41, a signal reception unit 42, a velocity information acquisition unit 43, an object discrimination unit 44, a reflection intensity information acquisition unit 45, a distance information acquisition unit 46, and a presence/absence determination unit 47.

Hereinafter, the operation of the controller 40 will be described also for describing each unit.

As illustrated in FIG. 2, the control signal generation unit 41 outputs a control signal to the voltage-controlled oscillator 12 via a D/A converter, an amplifier, or the like, whereby a transmission wave whose frequency changes with time is transmitted from the transmission antenna 11. This transmission wave is a pulse wave also called a chirp. In other words, the transmitter 10 of the present embodiment periodically emits a transmission wave called a chirp.

The signal reception unit 42 receives the beat signal received by the receiver 20, and specifically receives an analog value indicating a sine wave signal having an amplitude proportional to the intensity of the reflected wave and a frequency proportional to the distance of the object.

The velocity information acquisition unit 43 acquires velocity information regarding the velocity of the object on the basis of the reflected wave from the object, and specifically, acquires velocity information regarding the velocity of the object approaching the predetermined area P or distant from the predetermined area P.

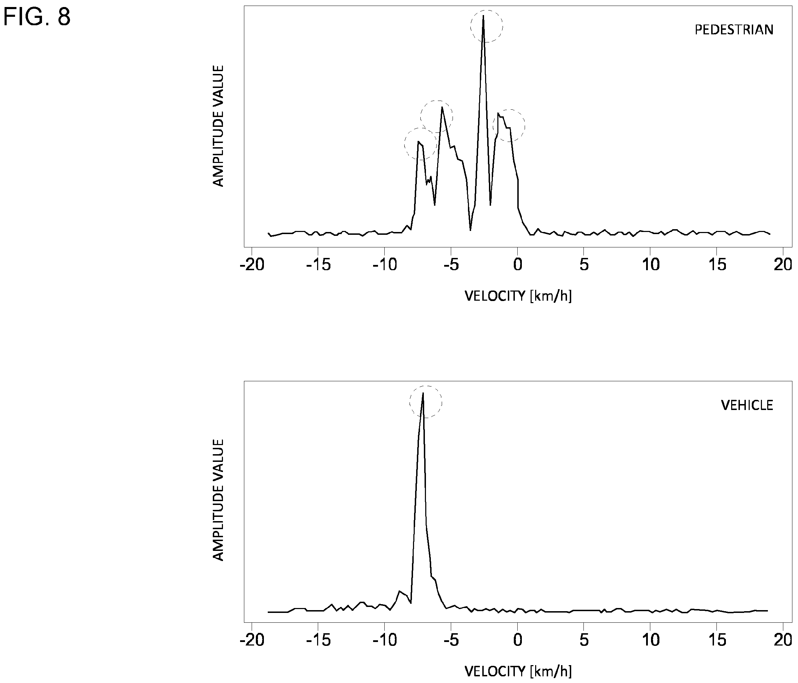

The velocity information acquisition unit 43 of the present embodiment performs signal processing on the beat signal received by the above-described signal reception unit 42 to acquire, as velocity information, a velocity distribution that can be represented in a graph in which one axis is a velocity and the other axis is an amplitude value, as illustrated in FIG. 8.

Note that, as an example of the signal processing for obtaining the velocity information, there is an aspect in which the distance and the phase of the object are calculated by performing frequency analysis such as Fourier transform on the beat signal, and the velocity information is acquired on the basis of temporal changes in the distance and the phase.

Here, as illustrated in the upper part and the lower part of FIG. 8, the above-described velocity distribution has a difference in distribution shape depending on whether the object that reflects the transmission wave is a pedestrian or a vehicle, in other words, whether the object that is the source of the reflected wave is a pedestrian or a vehicle.

Specifically, in a case where the object is a pedestrian, velocity components caused by motions of the limbs appear in the distribution and a plurality of peaks appear, whereas in a case where the object is a vehicle, a steep peak appears at a certain velocity.

Therefore, the object discrimination unit 44 determines whether or not the object is a vehicle on the basis of the velocity information acquired by the velocity information acquisition unit 43.

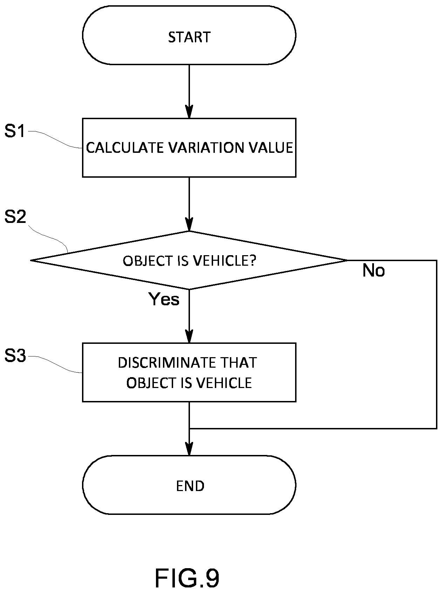

Specifically, as illustrated in FIG. 9, the object discrimination unit 44 first calculates a variation value indicating a variation such as a variation or a standard deviation of the velocity distribution as the velocity information (S1). Then, by comparing the variation value with a threshold value, it is determined whether or not an object trying to enter the predetermined area P is a car (S2). Specifically, if the variation value is lower than the threshold value, the object is discriminated as a vehicle (S3), and if the variation value exceeds the threshold value, the object is discriminated as not a vehicle, and the discrimination result is output to the presence/absence determination unit 47 described later as discrimination information.

Note that the mode of the object discrimination unit 44 is not limited to the above-described aspect, and for example, may be configured to detect peaks appearing in the velocity distribution, and compare the number, height, and the like of the peaks as index values with threshold values to discriminate whether the object is a vehicle.

The reflection intensity information acquisition unit 45 acquires the reflection intensity information indicating the intensity of the reflected wave from the object, and specifically, acquires the amplitude value of the beat signal received by the signal reception unit 42 as the reflection intensity information and outputs the reflection intensity information to the presence/absence determination unit 47 described later.

The distance information acquisition unit 46 acquires distance information indicating the distance to the object on the basis of the reflected wave from the object, and acquires the distance information by performing signal processing on the beat signal received by the signal reception unit 42. Specifically, the distance information acquisition unit 46 calculates the distance to the object by performing frequency analysis such as Fourier transform on the beat signal, and outputs the distance information to the presence/absence determination unit 47 described later.

Here, as described above, the velocity information, the reflection intensity information, and the distance information are information acquired using the single transmitter and the single receiver 20, in other words, information obtained by a single input single output (SISO) method.

Then, the presence/absence determination unit 47 determines the presence or absence of an object in the predetermined area P on the basis of the reflection intensity information and the distance information obtained by the SISO method.

The presence/absence determination unit 47 of the present embodiment is configured to determine the presence or absence of the vehicle in the predetermined area P in a case where the above-described object discrimination unit 44 determines that the object entering the predetermined area P is the vehicle.

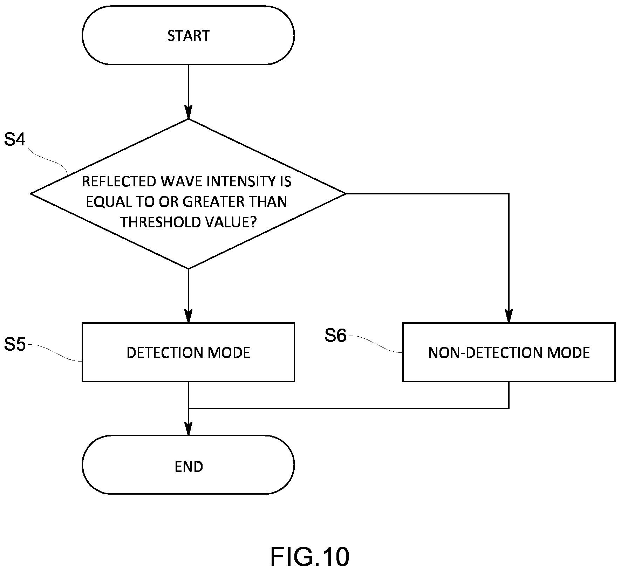

More specifically, first, the presence/absence determination unit 47 is configured to determine from which direction the reflected wave has returned on the basis of the intensity (reception level) of the reflected wave indicated by the reflection intensity information as illustrated in FIG. 10, and here, determines whether the intensity of the reflected wave is equal to or greater than a threshold value (S4).

When the intensity of the reflected wave is equal to or greater than the threshold value, the reflected wave is from the predetermined area P, in other words, the vehicle should be present in the predetermined area P. Therefore, as illustrated in FIG. 10, the presence/absence determination unit 47 enters a detection mode for detecting the vehicle in the predetermined area P, and starts to determine the presence or absence of the vehicle in the predetermined area P (S5).

On the other hand, when the intensity of the reflected wave is lower than the threshold value, the reflected wave is not from the predetermined area P but from, for example, the front area Pf or the rear area Pb. In other words, there should be no vehicle in the predetermined area P. Therefore, as illustrated in FIG. 10, the presence/absence determination unit 47 stops the vehicle detection operation for the predetermined area P and enters a non-detection mode, and does not determine the presence or absence of the vehicle in the predetermined area P (S6).

In the detection mode described above, the presence/absence determination unit 47 determines the presence or absence of a vehicle in the predetermined area P on the basis of the distance information.

Specifically, the presence/absence determination unit 47 determines that the vehicle is present in the predetermined area P in a case where the distance indicated by the distance information is equal to or less than the threshold value, and determines that the vehicle is not present in the predetermined area P, in other words, the vehicle has moved away from the predetermined area P in a case where the distance indicated by the distance information exceeds the threshold value.

Then, the presence/absence determination unit 47 outputs the presence/absence information indicating the above-described determination result to the control device C that controls the operation of the movable gate G or the like provided in the vicinity of the predetermined area P, and the control device C raises/lowers or opens/closes the movable gate G, for example, on the basis of the received presence/absence information.

According to the vehicle detection sensor 100 configured as described above, it is possible to determine whether or not the object is a vehicle on the basis of the velocity information obtained by the SISO method, and it is possible to determine whether or not the object is in the predetermined area P on the basis of the reflection intensity information and the distance information obtained by the SISO method. Therefore, it is not necessary to use an expensive MIMO sensor, and it is possible to provide the vehicle detection sensor 100 with high detection accuracy at low cost.

In addition, since the presence or absence of the object is determined on the basis of both the reflection intensity information and the distance information, the determination material is more than that based on one of the reflection intensity information and the distance information, and the presence or absence of the object in the predetermined area P can be determined more reliably.

Further, by emitting the transmission wave toward the predetermined area P, it is possible to obtain stable reflection intensity from the vehicle existing in the predetermined area P, and it is easy to determine whether or not there is the object, and by emitting the transmission wave toward the front area Pf or the rear area Pb, it is possible to obtain velocity information for determining whether or not the object is the vehicle.

A transmission wave traveling toward the predetermined area P and transmission waves traveling toward the front area Pf and the rear area Pb are emitted from a common transmitter, and each of reflected waves of the transmission waves reflected by an object and returned is received by the common receiver 20. Therefore, it is only necessary to prepare one set of a transmitter and a receiver, so that the cost of the sensor can be further reduced.

Since the transmission/reception pattern indicating the transmission/reception antenna gain has the first peak appearing in the front direction and the quasi-peak appearing at an angle different from the front direction, and an intensity difference is generated between the first peak and the quasi-peak, it is possible to determine whether the received reflected wave has returned from the predetermined area P or returned from the front area Pf or the rear area Pb.

This makes it possible to accurately determine the presence or absence of a vehicle in the predetermined area P, for example, even in an environment with a wide road width.

Since the transmission/reception pattern has quasi-peaks on the high angle side and the low angle side of the first peak, it is possible to determine whether or not an object approaching the predetermined area P or an object distant from the predetermined area P is a vehicle. As a result, for example, detecting the velocity of the moving object in the far direction may be used as one of the criteria for determining that the vehicle has exited from the predetermined area P. In this way, the accuracy of the exit determination can be improved.

Further, with the above-described configuration, the vehicle detection sensor 100 according to the present invention can be used for both the left lane and the right lane.

Since the dielectric lens 50 that refracts a part of the transmission wave emitted from the transmitter and guides the part of the transmission wave traveling toward the front area Pf or the rear area Pb is provided, the radiation power of the transmission wave toward the front area Pf or the rear area Pb can be increased, and the configuration for emitting the transmission wave to the front area Pf or the rear area Pb while emitting the transmission wave to the predetermined area P can be easily realized by using the dielectric lens 50.

Note that the present invention is not limited to the above embodiment.

For example, although the presence/absence determination unit 47 determines the presence or absence of an object in the predetermined area P on the basis of both the reflection intensity information and the distance information in the above embodiment, the presence/absence determination unit 47 may be configured to determine the presence or absence of an object in the predetermined area P on the basis of one of the reflection intensity information and the distance information as long as the presence or absence can be determined relatively easily in an installation environment such as an environment having a narrow vehicle path width.

In addition, in the above embodiment, the transmission/reception pattern having the first peak and the quasi-peak is obtained using the dielectric lens 50. However, for example, the transmission/reception pattern having the first peak and the quasi-peak may be obtained without using the dielectric lens 50 by appropriately changing the shape, direction, arrangement, or the like of the transmission antenna 11 and the reception antenna 21.

Further, in the above embodiment, each of the transmission wave and the reflected wave is refracted using the dielectric lens 50, but only one of the transmission wave and the reflected wave may be refracted using the dielectric lens 50. That is, as the dielectric lens 50, a part of the transmission wave emitted from the transmitter 10 may be refracted and guided to the front area Pf or the rear area Pb, a part of the reflected wave returning from the front area Pf or the rear area Pb may be refracted and guided to the receiver 20, or both the transmission wave and the reflected wave may be refracted.

The vehicle detection sensor 100 according to the present invention outputs the presence/absence information to the control device C that controls the operation of the movable gate G in the above embodiment, but may output the presence/absence information to, for example, an alarm device that issues an alarm at the time of exiting the vehicle.

In the above embodiment, the transmission wave is emitted from the common transmitter toward the predetermined area P and the front area Pf or the rear area Pb, and the reflected wave returning from the predetermined area P and the front area Pf or the rear area Pb is received using the common receiver 20. Alternatively, the transmission wave may be emitted from different transmitters of the SISO method toward the predetermined area P and the front area Pf or the rear area Pb, or the reflected wave returning from the predetermined area P and the front area Pf or the rear area Pb may be received using different receivers 20 of the SISO method.

In addition, the present invention is not limited to the above embodiment, and it goes without saying that various modifications can be made without departing from the gist of the present invention.

### Industrial Applicability

According to the present invention, it is possible to provide a vehicle detection sensor with high detection accuracy capable of detecting entrance and exit of a vehicle to and from a predetermined area while discriminating between a vehicle and a pedestrian at low cost.

### Reference Signs List

- 100: vehicle detection sensor
- P: predetermined area
- Pf: front area
- Pb: rear area
- G: movable gate
- 10: transmitter
- 11: transmission antenna
- 12: voltage-controlled oscillator
- 20: receiver
- 21: reception antenna
- 30: mixer
- 40: controller
- 41: control signal generation unit
- 42: signal reception unit
- 43: velocity information acquisition unit
- 44: object discrimination unit
- 45: reflection intensity information acquisition unit
- 46: distance information acquisition unit
- 47: presence/absence determination unit
- C: control device
- 50: dielectric lens
- 51: wall surface
- 52: radio wave passage
- B: substrate

## Claims

1. A vehicle detection sensor installed at a predetermined place on a site where a vehicle enters or exits, the vehicle detection sensor emitting a transmission wave whose frequency changes as time passes, and receiving a reflected wave of the transmission wave reflected by an object and returning, the vehicle detection sensor comprising:
a velocity information acquisition unit that acquires velocity information regarding a velocity of an object approaching a predetermined area or going away from the predetermined area on a basis of the reflected wave;
an object discrimination unit that determines whether or not an object is a vehicle on a basis of the velocity information; and
a presence/absence determination unit that determines whether or not an object is in the predetermined area on a basis of at least one of reflection intensity information indicating an intensity of the reflected wave or distance information indicating a distance to an object obtained on a basis of the reflected wave, wherein
the velocity information and at least one of the reflection intensity information and the distance information are information obtained by a single input single output (SISO) method.

2. The vehicle detection sensor according to claim 1, further comprising:
a reflection intensity information acquisition unit that acquires the reflection intensity information; and
a distance information acquisition unit that acquires the distance information, wherein
the presence/absence determination unit determines whether an object is present in the predetermined area on a basis of the reflection intensity information and the distance information.

3. The vehicle detection sensor according to claim 1, wherein the vehicle detection sensor is configured to emit a transmission wave toward the predetermined area, and emit a transmission wave toward a front area or a rear area away forward or rearward from the predetermined area along an entrance/exit direction of the vehicle.

4. The vehicle detection sensor according to claim 3, wherein a transmission wave traveling toward the predetermined area and a transmission wave traveling toward the front area or the rear area are emitted from a common transmitter, and reflected waves of the transmission waves reflected by an object and returned are received by a common receiver.

5. The vehicle detection sensor according to claim 4, wherein a transmission/reception pattern indicating a transmission/reception antenna gain obtained by combining a transmission antenna gain of the transmitter corresponding to an emission angle of a transmission wave and a reception antenna gain of the receiver corresponding to a reception angle of a reflected wave has a first peak appearing in a front direction and a quasi-peak appearing at an angle different from the front direction and smaller than the first peak.

6. The vehicle detection sensor according to claim 5, wherein the transmission/reception pattern has the quasi-peak on each of a high angle side and a low angle side of the first peak.

7. The vehicle detection sensor according to claim 4, further comprising a dielectric lens that refracts a part of a transmission wave emitted from the transmitter and guides the part of the transmission wave to the front area or the rear area.

8. A vehicle detection sensor program, which is used in a vehicle detection sensor installed at a predetermined place on a site where a vehicle enters or exits, the vehicle detection sensor emitting a transmission wave whose frequency changes as time passes, and receiving a reflected wave of the transmission wave reflected by an object and returning, the program causing a computer to exert functions as:
a velocity information acquisition unit that acquires velocity information regarding a velocity of an object approaching a predetermined area or going away from the predetermined area on a basis of the reflected wave;
an object discrimination unit that determines whether or not an object is a vehicle on a basis of the velocity information; and
a presence/absence determination unit that determines whether or not an object is in the predetermined area on a basis of at least one of reflection intensity information indicating an intensity of the reflected wave or distance information indicating a distance to an object obtained on a basis of the reflected wave, wherein
the velocity information and at least one of the reflection intensity information and the distance information are information obtained by a single input single output (SISO) method.
